# EUROPEAN PATENT APPLICATION

(11) **EP 3 057 283 A1**
(43) Date of publication of application: **17.08.2016**
(21) Application number: 15305233.7
(22) Date of filing: 16.02.2015
(51) Int. Cl.: H04L 29/06, G06F 21/53, G06F 21/55

(54) **A method for mitigating a security breach, a system, a virtual honeypot and a computer program product**

(71) Applicant: ALCATEL LUCENT, 92100 Boulogne-Billancourt (FR)
(72) Inventor: McBride, Alan, County Wicklow (IE); Jaramillo, Fabio, Murray Hill, NJ 07974-0636 (US)
(74) Representative: Bryers LLP

(57) **Abstract**

A method for mitigating a security breach by an attacker in a virtualized system, the method comprising instantiating a replacement VM in response to a security breach at a first virtual machine (VM) in program execution over physical hardware of the system, the replacement VM to replace the first VM for users of the first VM other than the attacker, migrating the users to the replacement VM, and segregating the first VM for quarantined use by only the attacker in the form of a honeypot.

## Description

### TECHNICAL FIELD

Aspects relate, in general, to a method for mitigating a security breach, a system, a virtual honeypot and a computer program product.

### BACKGROUND

Honeypots are monitored resources that can be employed to detect, observe, distract or deter attackers or intruders of a system. In, for example, a computing environment, a honeypot may be a physical hardware device, or may be a virtual honeypot in a virtualised system.

Current honeypot techniques involve configuring a resource to act (passively or actively) as a honeypot in advance. Moreover, when honeypots are deployed along with genuine service nodes (e.g. an email honeypot alongside a genuine email server), there is a probability that the attacker may access the real or honeypot version. There are also various ways in which a potential attacker may recognize a resource as a honeypot and thus may avoid detection.

### SUMMARY

According to an example, there is provided a method for mitigating a security breach by an attacker in a virtualized system, the method comprising instantiating a replacement VM in response to a security breach at a first virtual machine (VM) in program execution over physical hardware of the system, the replacement VM to replace the first VM for users of the first VM other than the attacker, migrating the users to the replacement VM, and segregating the first VM for quarantined use by only the attacker in the form of a honeypot. The first VM can continue to interact with the physical hardware of the system and/or wherein instantiating the replacement VM can include providing additional required resources associated with the first VM for the replacement VM, whereby to simulate additional functions for the replacement VM. Migrating users can include reconfiguring an end point for requests from users migrated from the first VM to the replacement VM, whereby to maintain a desired level of service for the migrated users. Segregating the first VM can include migrating the first VM to a sandbox, whereby to quarantine the first VM. Segregating the first VM can include isolating the first VM from at least the replacement VM using a firewall to isolate communications to and from the first VM from the rest of the system.

According to an example, there is provided a system including multiple virtual machines (VMs) in program execution on physical computing hardware supported by a hypervisor, the system including, an analytics engine to monitor the system and determine or detect the existence of a security breach of a compromised VM by an attacker, an autonomics module operable to receive data from the analytics engine relating to the compromised VM, and to quarantine the compromised VM, wherein the system is operable to instantiate a replacement VM to replace the compromised VM, migrate all users, other than the attacker, of the compromised VM to the replacement VM. The autonomics module can provide data relating to the compromised VM to a system orchestration module operable to instantiate the replacement VM on the basis of the data provided. The autonomics module can determine whether the compromised VM uses additional system resources to provide additional functions, and to provide additional virtual resources to simulate the additional functions for the replacement VM. The autonomics module can quarantine the compromised VM by migrating it to a sandbox. The autonomics module can quarantine the compromised VM by isolating it from at least the replacement VM using a firewall to isolate communications to and from the compromised VM from the rest of the system.

According to an example, there is provided a virtual honeypot in a virtualized system, the honeypot operable to segregate and enable the behavior of a system intruder to be studied, wherein the virtual honeypot is a virtual machine (VM) repurposed from a first VM in response to a security breach by the intruder at the first VM, the virtual honeypot operable to replace the first VM for users of the first VM other than the intruder, and to enable quarantined use by only the intruder. The virtual honeypot can interact with the physical hardware of the system and/or is operable to use additional system resources to provide additional functions, whereby to maintain an illusion of normal system activity for the repurposed first VM. The virtual honeypot can be segregated in order to isolate the repurposed first VM from a replacement VM for the first VM and/or the system using a firewall to isolate communications to and from the repurposed first VM from the rest of the system. The virtual honeypot can provide intruder communications and/or communication logs to the system.

According to an example, there is provided a computer program product, comprising a computer usable medium having computer readable program code embodied therein, said computer readable program code adapted to be executed to implement a method for mitigating a security breach by an attacker in a virtualized system as provided herein.

### BRIEF DESCRIPTION OF THE DRAWINGS

Embodiments will now be described, by way of example only, with reference to the accompanying drawings, in which:
Figure 1 is a schematic representation of a virtualised system;
Figure 2 is a schematic representation of a system according to an example;
Figure 3 is a schematic representation of a system according to an example; and
Figure 4 is a schematic representation of a system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Typically, in existing cloud/network function virtualisation (NFV) networks, virtual honeypot resources can be deployed alongside actual service instances of resources. For example, virtual SIP proxy honeypots can be deployed alongside active SIP proxy resources. It is non-optimal to configure and deploy honeypot resources in advance. Furthermore, the honeypot technique may be only partially effective if there is a probability that an attacker may access a real resource rather than a honeypot variant. The attacker may, by various means, detect the honeypot nature of the resource. If a real resource is compromised, the honeypot plays no part in remediating the breach.

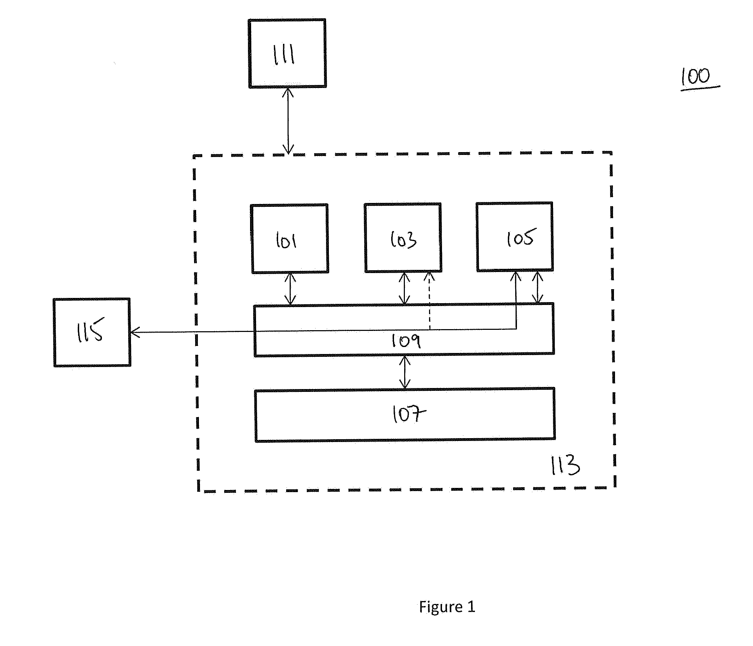

Figure 1 is a schematic representation of a virtualised system. Multiple virtual machines (VMs) 101, 103, 105 are in program execution over physical hardware 107 via a virtual machine monitor (VMM) 109. VMs 101, 103 provide, in the example of figure 1 network functions for user equipment (UE) 111 as part of a broader wireless telecommunication network 100. For example, and as is known, certain network functions of the network can be performed using one of more VMs 101, 103. A VM 105 is deployed as a pre-existing and pre-configured virtual honeypot for the system 113. In the example of figure 1, VM 105 acts as a honeypot for a resource or function of VM 103. That is, VM 105 is a computational resource that is dedicated to mimic the functionality of VM 103 and act as a tool, once it has been compromised, to collect information about an attacker or intruder 115 who believes that they are interacting with VM 103. The use of virtual honeypots in this context is well known, and so the deployment and process for capturing an intruder are not described in more detail.

Monitoring the data that enters and leaves the VM 105 thus enables information to be gathered about attacker 115 that would not otherwise be available, and also enables the system to be secured since the VM 105 can be isolated from the rest of the system.

According to an example, the flexibility of virtualization and software-defined networking (SDN) is used to dynamically and autonomically re-configure an actual active resource as a honeypot when an attack or a breach is detected or suspected. This is achieved by dynamically instantiating a replacement virtual instance of the resource and by quarantining or segregating the compromised instance. In this scenario, quarantining means that the compromised virtual instance continues to run but with segregation from users other than the attacker so that other parts of the system 113 cannot be compromised by an attacker.

Thus, there is a repurposing of an existing virtual resource as a honeypot, which is performed transparently to the attacker, while maintaining service for legitimate users and without the need to configure the honeypot in advance.

Using software defined networking (SDN) mechanisms, in which network services for the system can be managed through abstraction of lower-level functionality by decoupling the system that makes decisions about where traffic is sent (the control plane) from the underlying systems that forward traffic to the selected destination (the data plane), and which is generally well known and therefore not described in more detail, communication with the attacker is seamlessly maintained but is segregated from other communications, transparently to the attacker. Segregation of the quarantined resource may involve migration of the virtual instance to a sandbox, or segregation of the virtual instance from other virtual resources using virtual firewalling and other techniques. Because an actual active instance of a virtual service node will dynamically become a honeypot, no advance configuration or deployment of dedicated honeypot resources is required. Also, potential attackers cannot recognize the honeypot nature of the resource in advance since the node is a real active service node. Since the compromised resource continues to run in quarantine, the attacker is unaware that their endeavours have been detected, and their actions can be monitored for the purposes of gathering of threat intelligence, action against the attacker and forensic analysis of the attack itself.

An attack can be detected using any number of suitable methods. For example, log analysis, intrusion detection system (IDS) alarms, Security Incident and Event Management (SIEM) system alerts, data analytics or manual detection can be used in order to detect the presence of a threat or intruder, all of which are typically well known mechanisms for the detection of an attack or intruder.

According to an example, an existing VM that has been compromised or is under attack can be reconfigured, using SDN mechanisms, as a honeypot. A replacement instance of the virtual resource is instantiated, and legitimate users are migrated to this replacement instance. The compromised virtual instance is quarantined. In an example, its networking communication is segregated and blocked for all sources other than the attacker. Enhanced levels of logging and network packet capture can be enabled to capture as much information as possible for forensic analysis. Where appropriate, virtual resources can be used to simulate other functions (e.g. simulated network elements or OSS interfaces).

In another example, a virtual SIP proxy can be repurposed as a virtual honeypot when an attack or breach is detected or suspected.

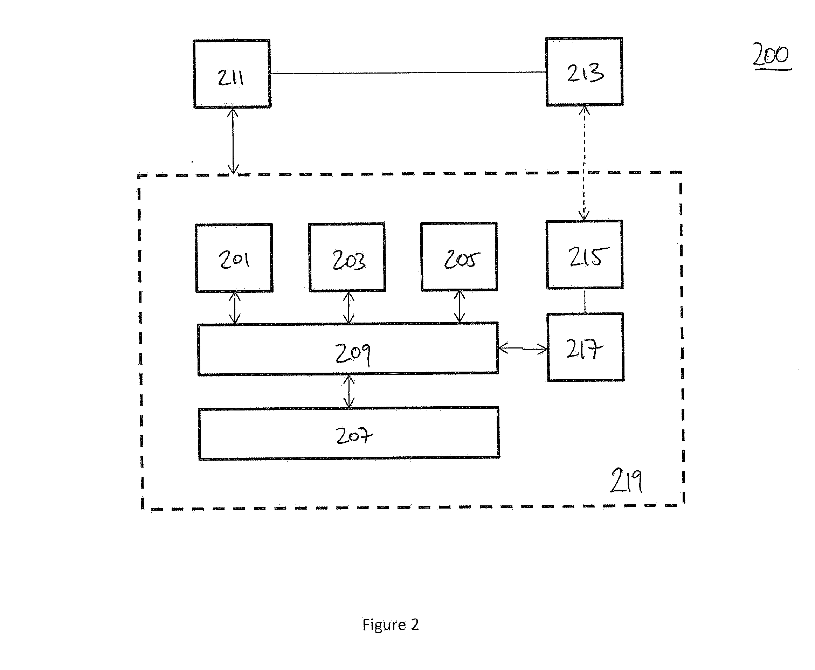

Figure 2 is a schematic representation of a system according to an example. The virtualised system 200 comprises multiple virtual machines (VMs) 201-205 in program execution on physical computing hardware 207 supported by a hypervisor (VMM) 209. The system 200 includes an analytics engine 211 to monitor the system 200, and an autonomics module 213 operable to receive data from the analytics engine 211. Autonomics module 213 is operable to provide data representing instructions to an orchestration and automation module 215 that is operable, via network virtualization and automation engine 217 to control aspects of the system 219 as will be described in more detail below. In an example, the system 200 may be of a wireless telecommunication network. For example, system 200 can be provided as of the core network portion of network. Engine 211 and module 213 may be provided as of the system 200 in the same location as the rest of the system 200, or may be provided remotely. A VM of the system 200 can execute a network function for the wireless telecommunication network.

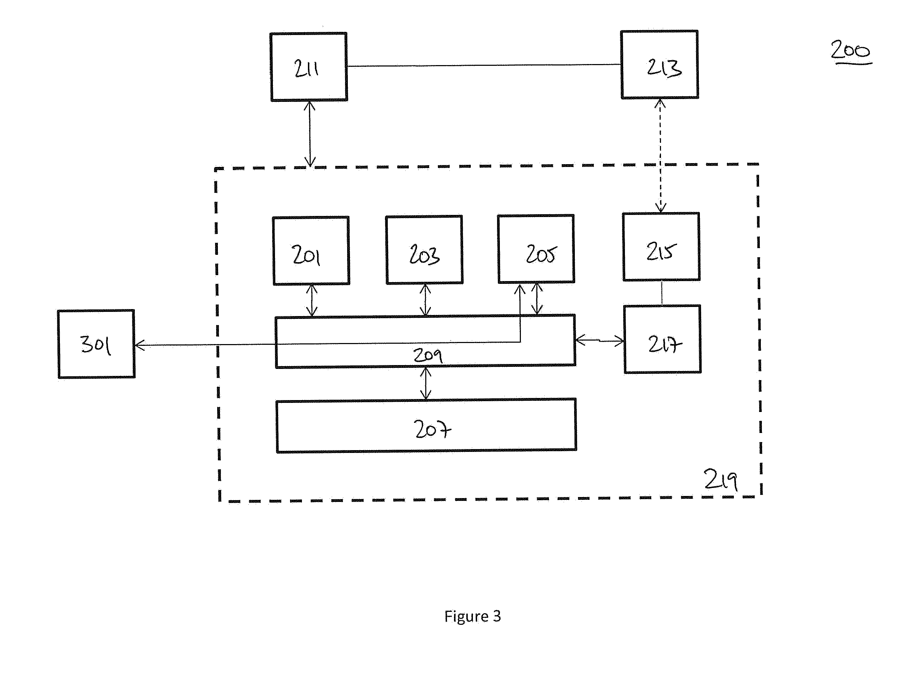

Figure 3 is a schematic representation of a system according to an example. In the example of figure 3, an intruder (or attacker) 301, which will typically be a remote (from system 200) device, acting automatically or under the control of a user is depicted. The attacker attempts to breach VM 205 or to pivot and escalate privileges associated with VM 205 in order to gain access to the VM 205 and/or system 219. Analytics engine 211 detects a breach using, for example, one of the methods noted above. That is, for example, an attack by entity 301 can be detected using log analysis by engine 211 of interaction logs between VM 205 and VMM 209 and/or the broader system 219 in order to determine the presence (or absence) of interactions of the VM 205 that fall outside of a pattern, which may be represented by a profile for the VM 205 for example. That is, VM 205 interactions may typically follow a pattern which varies in a temporally predictable manner, and/or in which the number of variations varies in a predictable manner. For example, the number of interactions may typically predictably vary according to a broadly regular pattern that can be mapped to a profile for the VM. For example, there may be no interactions or an increase in interactions/communications during certain periods of time, such as on certain days or during certain hours of the day.

An intrusion detection system (IDS) alarm may be used. For example, Security Incident and Event Management (SIEM) system alerts, data analytics or manual detection can be used in order to detect the presence of a threat or intruder, all of which are typically well known mechanisms for the detection of an attack or intruder.

Upon detection of a breach, the analytics engine 211 can transmit data to autonomics module 213. The data can represent the VM that has been breached and the nature of the breach. For example, this can include data representing whether there are one or more attackers, the IP address or other identification of the attacker, and a severity associated with the attack, such as whether the attack is considered to be of critical or lower importance based on factors such as the nature of the compromised VM, e.g. its relative importance to the system 200 and so on. The analytics engine 211 may also signal that it is suspicious of a breach, with data representing a confidence level. In other words, according to a predefined policy, autonomic actions may be taken to quarantine for a suspected breach, in order to investigate it and confirm or refute it.

Autonomics module 213 can proceed to instruct that there is quarantine of the compromised VM 205. In the example of figure 3, module 213 communicates with orchestration and automation module 215 that is operable, via network virtualization and automation engine 217, to control aspects of the system 200. For example, the autonomics module 213 can make a determination, based on data received from the engine 211 as to whether action should be taken in view of the breach that has been detected using a configurable policy that maps certain actions to be taken or instructed with the received data. The autonomics module 213 can be used to automatically provide instructions to the orchestration and automation module 215 representing a compromised VM to be mirrored. That is, the orchestration and automation module 215 receives data indicating that VM 205, in the example of figure 3, is compromised and that a replacement VM to replace the compromised VM should be instantiated. It can instruct the automation engine 217 to instantiate a new VM, quarantine the compromised VM, and instruct that all users, other than the attacker, of the compromised VM 205 be migrated to the replacement VM.

A configurable policy can provide a set of actions to be taken if a breach is detected or suspected, and actions can be contingent upon a threshold confidence level being exceeded. For example, if an attack is detected with a high degree of confidence (such as, say, greater than 60%), and a policy dictates that a replacement VM be instantiated if an attack is detected with a confidence level that is anywhere from a medium confidence level upwards (such as, say, from 50% upwards, therefore including high), the autonomics module can instruct the orchestration and automation module 215 to quarantine the compromised VM, and instantiate a replacement VM for all users other than the attacker.

For example, module 213 can determine the users of the VM 205 from data representing the communication logs between VM 205 and clients of the VM. As such, the IP addresses or other suitable identifiers of the clients can be determined. The module 213 can therefore instruct module 215 to migrate these users to the replacement VM, whilst ensuring that the attacker continues to use the compromised VM. That is, the attacker is unaware that other users have been migrated from VM 205 and that he is now communicating with the VM on his own.

Accordingly, an analytics engine according to an example can monitor data relating to, for example, interactions and requests between clients and VMs of a system in order to determine the presence of or likelihood that there is an attack. The analytics engine can provide details of the attack, such as the identity of the compromised VM and the identity of the attacker (e.g. an IP address of an attacking device) and provide a metric or measure representing a confidence level associated with the attack. For example, if there are only few instances (e.g. less than a predefined number per minute) of a user accessing resources at unusual times (e.g. during their night hours), and/or from an unusual (unrecognised or blacklisted) location, and/or with unusual (e.g. irregular) frequency, and/or making changes where they would not usually do so an attack can be given a low confidence level. If the number of instances is higher, for example more than the predefined number per minute, then a relatively higher confidence level measure can be provided. Measures may be low/medium/high, relating to for example x/2x/3x interactions per minute, or can be a percentage, such as a normalised percentage based on the number of suspicious interactions per minute over the course of an hour and so on. Such behaviours can be recognised as an attack, however it will be appreciated that there are many other known ways in which intrusion detection can be performed and which are applicable to the present invention

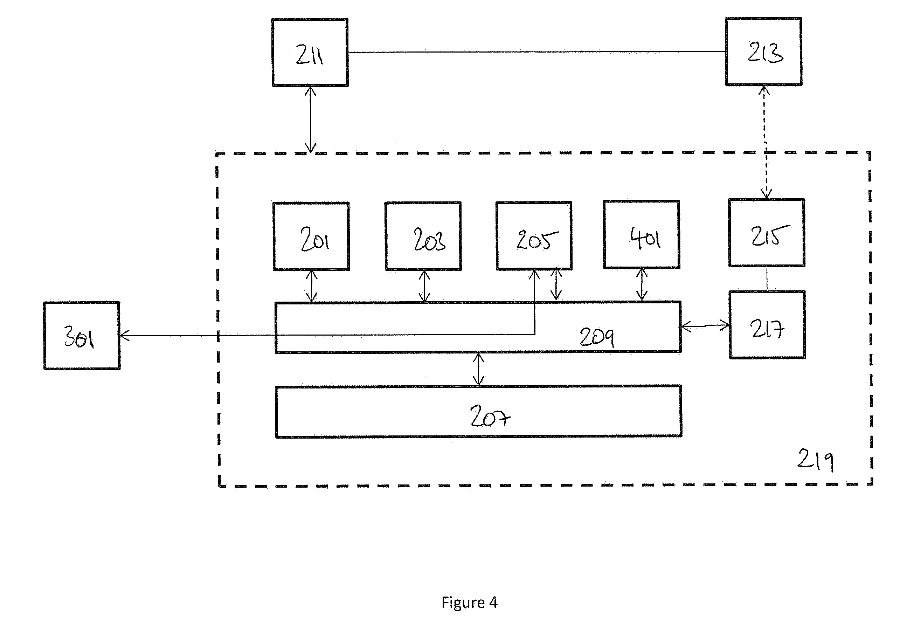

Figure 4 is a schematic representation of a system according to an example. In the example of figure 4 a replacement VM 401 has been instantiated to replace VM 205 for all users of VM 205 except the attacker 301. Accordingly, attacker 301 maintains contact with VM 205 whilst other users of VM 205 are migrated to replacement VM 401. Migration of legitimate users may involve migration of the original network addresses of users from the original VM (now the compromised VM) to the replacement VM, and update of routing information in the network to route their traffic to the replacement VM. This can involve the use of software-defined networking (SDN) to control the updates from a centralized controller for example.

An alternative approach could be to update network address translation (NAT) at the appropriate border or gateway function. Another alternative could be to use virtual networking to segregate the legitimate users from the attacker and to route their traffic independently.

VM 205 is segregated or isolated in order to provide quarantined use of the VM only by the attacker. That is, the VM 205 can be operated in a sandbox or using a firewall so that the attacker 301 cannot access the rest of the system and so that other users or resources can be compromised by the attacker 301. As is typically known, a sandbox provides a tightly controlled set of resources for execution guest applications, such as scratch space on disk and memory. Overall network access and the ability to inspect the host system or read from input devices can be disallowed or heavily restricted. In this connection, the VM 205 can continue to use system resources in order to maintain the illusion for the attacker 301 that the VM is operating as normal. If other resources are required or become required by the VM 205 in order for it to operate in an expected manner for the attacker 301 so as to avoid suspicion, the module 213 can instruct the module 215 to instantiate or otherwise provide access to such resources. For example, in the event that the VM hosted a network management function which interfaces to real network elements, then in order to maintain the illusion of working as normal within the replacement VM, a network simulation function can be instantiated for the network management function to interface with. The attacker is then able to execute network configuration commands through the network management function with the illusion of operating on a real network, however, actual operations on a real network are not occurring, therefore protecting the system from the attacker whilst enabling data to be collected on the attacker's activities and requests.

Data representing the interactions and requests of the attacker 301 and VM 205 can be gathered by, for example, VMM 209 in the normal course of interaction of the attacker 301 with the VM 205 and since the attacker is unaware that their interactions are being monitored. The VMM can forward the captured data to the module 217 so that it can be passed to, for example, module 213 and engine 211 for further processing and/or for it to be provided to a remote location. For example, data representing the interactions and requests of the attacker 301 and VM 205 can be used to generate a profile for the attacker 301 and/or to characterize the breach. A signature or profile can be generated in order to enable future similar attack to be quickly spotted.

In an example, the analytics engine can observe the profile of security-pertinent data over time, and would thus be in a position to recognize changes against a baseline that are anomalous. For example, access logs can be monitored so as to recognise a user accessing resources at unusual times (e.g. during their night hours), from an unusual location, with unusual frequency, or making changes where they would not usually do so. Such behaviours can be recognised as an attack, however it will be appreciated that there are many other known ways in which intrusion detection can be performed and which are applicable to the present invention.

For example, the analytics function may determine, through (for example) anomaly detection, that a breach is likely (perhaps with a certain confidence level). The Autonomics function is then in a position to make a determination based on this information. The determination will be governed by a configurable policy, so need not be hard-coded, and can be changed or tuned during operation. By way of example, the policy may be to quarantine a VM if a breach is determined with a confidence level above a certain threshold. The policy may further indicate that service for legitimate users should be maintained as far as is possible during quarantine. The autonomics function takes action using interfaces provided by the orchestration and management functions of the virtualization infrastructure and deployment environment.

In an example, the autonomics module does not itself control any virtual machine or network resources, but relies on and instructs the management and orchestration functions of the particular virtual environment to do so. These functions will typically provide APIs to allow external entities to make requests. For example, the OpenStack cloud environment provides APIs in the Python language which an autonomics function according to an example could use, however it will be appreciated that any suitable interface can be used.

Therefore, according to an example, an existing resource (VM) can be reconfigured, using SDN mechanisms, as a honeypot when an attack or a breach is detected or suspected. A replacement instance of the virtual resource is instantiated, and legitimate users are migrated to this instance. The compromised virtual instance is quarantined; for example, its networking communication is segregated and blocked for all sources other than the attacker. Enhanced levels of logging and network packet capture can be enabled to capture as much information as possible for forensic analysis. Where appropriate, virtual resources can be used to simulate other functions (e.g. simulated network elements or OSS interfaces). Another embodiment of the solution would be re-purposing a virtual SIP proxy as a virtual honeypot when an attack or breach is detected or suspected.

A replacement VM, to which legitimate service users are migrated, may or may not be provided at the same location or on the same machine or hypervisor instance as the compromised VM that it is intended to replace. That is, a replacement VM may be moved to or executing at a 'safer' place for example, such as a physically remote or removed location from the location at which the compromised VM is executing.

The VM which is repurposed for the attacker to provide the honeypot may itself be migrated to another location if a policy dictates that this is part of segregation. Moving VMs around is done for other reasons in virtualized environments, so just having ones VM moved is not a clue to the attacker that they have been discovered.

A person of skill in the art would readily recognize that steps of various above-described methods can be performed by programmed computers. Herein, some examples are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The examples are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody these principles and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for mitigating a security breach by an attacker in a virtualized system, the method comprising:
instantiating a replacement VM in response to a security breach at a first virtual machine (VM) in program execution over physical hardware of the system, the replacement VM to replace the first VM for users of the first VM other than the attacker;
migrating the users to the replacement VM; and
segregating the first VM for quarantined use by only the attacker in the form of a honeypot.

2. A method as claimed in claim 1, wherein the first VM continues to interact with the physical hardware of the system and/or wherein instantiating the replacement VM includes providing additional required resources associated with the first VM for the replacement VM, whereby to simulate additional functions for the replacement VM.

3. A method as claimed in claim 1 or 2, wherein migrating users includes reconfiguring an end point for requests from users migrated from the first VM to the replacement VM, whereby to maintain a desired level of service for the migrated users.

4. A method as claimed in any preceding claim, wherein segregating the first VM includes migrating the first VM to a sandbox, whereby to quarantine the first VM.

5. A method as claimed in any preceding claim, wherein segregating the first VM includes isolating the first VM from at least the replacement VM using a firewall to isolate communications to and from the first VM from the rest of the system.

6. A system including multiple virtual machines (VMs) in program execution on physical computing hardware supported by a hypervisor, the system including:
an analytics engine to monitor the system and determine or detect the existence of a security breach of a compromised VM by an attacker;
an autonomics module operable to receive data from the analytics engine relating to the compromised VM, and to quarantine the compromised VM; wherein the system is operable to:
instantiate a replacement VM to replace the compromised VM;
migrate all users, other than the attacker, of the compromised VM to the replacement VM.

7. A system as claimed in claim 6, wherein the autonomics module is operable to provide data relating to the compromised VM to a system orchestration module operable to instantiate the replacement VM on the basis of the data provided.

8. A system as claimed in claim 6 or 7, wherein the autonomics module is operable to determine whether the compromised VM uses additional system resources to provide additional functions, and to provide additional virtual resources to simulate the additional functions for the replacement VM.

9. A system as claimed in any of claims 6 to 8, wherein the autonomics module is operable to quarantine the compromised VM by migrating it to a sandbox.

10. A system as claimed in any of claims 6 to 9, wherein the autonomics module is operable to quarantine the compromised VM by isolating it from at least the replacement VM using a firewall to isolate communications to and from the compromised VM from the rest of the system.

11. A virtual honeypot in a virtualized system, the honeypot operable to segregate and enable the behavior of a system intruder to be studied, wherein the virtual honeypot is a virtual machine (VM) repurposed from a first VM in response to a security breach by the intruder at the first VM, the virtual honeypot operable to replace the first VM for users of the first VM other than the intruder, and to enable quarantined use by only the intruder.

12. A virtual honeypot as claimed in claim 11, wherein the virtual honeypot is operable to interact with the physical hardware of the system and/or is operable to use additional system resources to provide additional functions, whereby to maintain an illusion of normal system activity for the repurposed first VM.

13. A virtual honeypot as claimed in claim 11 or 12, wherein the virtual honeypot is segregated in order to isolate the repurposed first VM from a replacement VM for the first VM and/or the system using a firewall to isolate communications to and from the repurposed first VM from the rest of the system.

14. A virtual honeypot as claimed in any of claims 11 to 13, the virtual honeypot operable to provide intruder communications and/or communication logs to the system.

15. A computer program product, comprising a computer usable medium having computer readable program code embodied therein, said computer readable program code adapted to be executed to implement a method for mitigating a security breach by an attacker in a virtualized system as claimed in any of claims 1 to 5.
